(19) Europäisches Patentamt
European Patent Office
Office européen des brevets

(11) **EP 2 107 390 B1**

(12) **EUROPEAN PATENT SPECIFICATION**

(45) Date of publication and mention
of the grant of the patent:
**16.05.2012 Bulletin 2012/20**

(51) Int Cl.:
*G01S 11/00* (2006.01)     *H04S 7/00* (2006.01)
*G01S 5/16* (2006.01)

(21) Application number: **08006384.5**

(22) Date of filing: **31.03.2008**

(54) **Rotational angle determination for headphones**

Rotationswinkelbestimmung für Kopfhörer

Détermination d'angle rotatif pour écouteurs

(84) Designated Contracting States:
**AT BE BG CH CY CZ DE DK EE ES FI FR GB GR
HR HU IE IS IT LI LT LU LV MC MT NL NO PL PT
RO SE SI SK TR**

(43) Date of publication of application:
**07.10.2009 Bulletin 2009/41**

(73) Proprietor: **Harman Becker Automotive Systems
GmbH
76307 Karlsbad (DE)**

(72) Inventor: **Jurzitza, Dieter
76131 Karlsruhe (DE)**

(74) Representative: **Grünecker, Kinkeldey,
Stockmair & Schwanhäusser
Leopoldstrasse 4
80802 München (DE)**

(56) References cited:
**DE-B3-102006 004 019**     **US-A- 5 495 534**
**US-A1- 2004 051 926**     **US-A1- 2004 156 512**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

The present invention relates to a tracking system and a method for determining the spatial orientation and/or position of a moveable object, in particular of a head wearing headphones for a surround sound reproduction of audio data. More specifically, the present invention relates to tracking a moveable object based on distance measurements between the moveable object and a reference location.

**A plurality of systems for tracking objects is known in the art. For instance, document** US 2004/0051926 A1 **describes a system wherein time-of-flight measurements of an electromagnetic signal, transmitted from an emitting device, backscattered at an object and received at a PMD sensor are performed. Thereby, a position (distance) measurement of the object relative to a frame, wherein an emitter and a PMD sensor are fixed, is achieved.**

In recent years, more and more advanced technologies of providing a reproduction of audio data in surround sound quality have emerged. Originally developed for cinematography, such techniques are now increasingly employed in the home environment. Analog as well as digital surround techniques are available. While analog techniques are still widespread in a pure audio environment today, digital techniques are mostly used in the digital video environment.

For surround reproduction, in addition to the conventional left and right front loudspeakers known from the stereo system, a front centre loudspeaker, a pair of left and right rear loudspeakers, and a "subwoofer" are used. A common version of surround sound is the 5.1 technique. In the 5.1 technique, six total channels of sound are provided, wherein 5 channels are foreseen for normal range speakers (right-front, centre, left-front, right-rear and left-rear) and one channel for LFE (low frequency effect), or subwoofer speaker. The subwoofer is a type of loudspeaker dedicated to the reproduction of lowest frequencies, typically from about 20Hz to 100Hz. It is difficult for small loudspeakers to reproduce frequencies below 40Hz. Therefore, it is advantageous to use one loudspeaker intended specifically for this task.

Besides the 5.1 technique comprising six separate channels, techniques are also known, wherein a smaller number of independent channels is sufficient. For instance, in an early surround version, the centre loudspeaker is fed by a channel comprising those signal portions that are contained in both conventional audio channels (left and right) in phase coherency, and the left and right rear speakers are fed from one channel with inverted phases. On the other hand, recent developments, such as 6.1 and 7.1 techniques, employ an even larger number of channels.

The perception of surround sound reproduced from audio data with the help of a surround reproduction system is generally based on the same principles that we employ for localizing a sound source in space in every day life. Namely, a sound signal from a particular sound source arrives at both ears of a person at different times and non-uniformly, (i.e. with different amplitude and phases). Additionally, the outer part of the human ear influences the frequency dependent attenuation of incoming sound signals dependent on the direction of the incoming signal. These effects are used for the localization of a sound source.

In the particular situation of surround sound reproduction, for instance in the home theatre system, the ears receive both direct sound from each speaker and multiple reflections contributed by the room's surfaces and furnishings. By the time it reaches the ears, the sound from each speaker has acquired a unique signature. Taken together, these signatures cue the brain as to the size and the acoustic properties of the room, the speakers' locations and the spatial properties of the original sound.

If it is desired to reproduce surround sound with the help of headphones, a problem arises. In the case of listening via headphones, the effects of amplitude and phase shifting as well as frequency filtering mentioned above that are necessary for localization of a sound source and therefore for generating a surround listening impression are generally eliminated. Instead, in the case of headphones, a sound source is located directly at each ear. Therefore, no natural surround sound impression can arise.

In order to compensate for this drawback of headphones as compared with surround reproduction using loudspeakers distributed in a room, technologies have been developed that pre-process the audio signals to be fed to headphones in such a way that the amplitude and phase shifts arising in a natural room are reproduced. Thereby, surround sound can be simulated for reproduction with stereo headphones. With the help of digital signal filtering technology, the sonic signature of a corresponding speaker properly placed in a carefully defined acoustic environment is imparted to each audio channel. This means that up to five virtual loudspeakers are created in a virtual room. In the case of 5.1 channel reproduction, the subwoofer signal is mixed into the left and right channels in equal proportions. Alternatively, a separate channel (virtual subwoofer channel) can be employed. A processor combines all this information into two encoded channels for feeding each of the ears of a person, via conventional stereo headphones. The result is a rather natural listening sensation, simulating surround reproduction. Such a simulation is also know under the term "virtual acoustics". A further improvement may be achieved with special loudspeakers including two sound sources per ear having a slightly shifted location with respect to each other.

However, a further problem arises in the case of reception of simulated surround sound via headphones. Namely, if the head of a person turns while listening to simulated surround sound via headphones, the simulated sound field turns together with the head, in contrast to the situation in conventional surround sound in a room, wherein the sound field remains fixed in the room when the head is turned. This leads to an unnatural and disturbed perception of the sound field.

The arising distortion effect is, for instance, especially relevant in the case of combined audio / video reproduction. While a person listening to surround sound via headphones and at the same time viewing the corresponding video sequences on a video screen would expect the corresponding amendment of the sound perception if he or she slightly moves their head, in the case of headphones simulating surround sound no change of the sound field occurs. Therefore, the perceived surround sound differs from what the user would expect. If, for instance, the video screen shows a musician playing at a central position in front of the viewer, and the user turns his or her head to the right, he or she would expect the sound to now come from the left hand side. However, the virtual sound simulated by the headphones still comes from in front of the person.

In order to compensate for the effects described above, tracking systems have been developed. Tracking systems are based on continuously acquiring the movement of the head (first of all the orientation, possibly also the position). With the help of the acquired information, an additional pre-processing of the sound data fed to the headphones is performed. The additional pre-processing reflects the movements of the head detected by measurement so that the simulated three-dimensional sound field is perceived as fixed in space although the head permanently moves.

Conventional tracking systems employed in the art can be classified as follows:

The first class of tracking systems employ a physical angle measurement device, such as an angular velocity sensor, that is positioned at the headphones for directly measuring a rotation angle of the head.

The second class of tracking systems operate on the basis of transmission time measurement. Signal transmitters continuously emit signals, which are received at detectors. Either the transmitters or the detectors are fixed at the headphones, while the respective counterparts are fixed in the room wherein the user is located. The detectors are connected to a processing unit that is capable of calculating parameters defining the orientation and position of the head by employing triangulation on the basis of evaluating the signal transmission time between transmitters and detectors. The employed signals emitted by the transmitters are preferably ultrasonic signals, however also infrared or radio wave signals are possible. Document US 5495534 shows a tracking system for headphones which belongs to said second class of tracking systems.

In order to completely determine orientation and position of the head, at least three transmitters in a triangular arrangement fixed with respect to each other, and a respective arrangement of the detectors is required. However, in order to determine only a few particular orientation and possibly position parameters (for instance, in a case where the number of degrees of freedom of motion of the headphones can be assumed to be restricted in good approximation), a smaller number of detectors and transmitters is sufficient.

Document US 2004/0156512 A1 describes an audio system, wherein a surround sound is generated for reproduction, based on audio data received from an arbitrary audio source, amplified and reproduced by a plurality of speakers. In particular, the speakers may be included in headphones. A location subsystem determines a position and/or orientation of a user (listener). Therefore, a system of transmitters and sensors is provided, preferably for infrared signals. Position/orientation information is forwarded to a subsystem for generating the surround audio output, in order to adjust the audio output to provide a natural sensing by the listener.

It is a drawback of both classes of conventional tracking systems mentioned above that the required hardware effort is rather great. Therefore, currently the mass production of head orientation and position detectors suffers from the fact that the equipment necessary for the detection is large, expensive and complicated.

This is obvious for the first class of tracking systems, as these tracking systems require a mechanical angular detecting system to be mounted at the headphones. Moreover, an electronic signal must be generated out of the mechanical detection result, and the electronic signal must be provided to a processing unit for evaluation in order to simulate the appropriate amendment to the sound field.

However, the hardware effort required is also rather large for the second class of conventional tracking systems outlined above. The transmission signals employed have to be specifically generated, transmitted and detected. Complicated processing is necessary in order to measure signal transmission times and determine distances between transmitters and detectors therefrom.

A further drawback of known solutions, in particular of those based on ultrasonic technology, is that these solutions suffer from low acceptance in a vehicle environment. On the other hand, methods based on stereo cameras or cameras in general need a high amount of computing power to determine distances, and moreover, they are expensive.

The present invention aims to provide an improved tracking system and tracking method for a moveable object with reduced hardware and processing effort.

This is achieved by the features of the independent claims.

According to a first aspect of the present invention, a tracking system is provided for determining at least an orientation or position of headphones for surround sound reproduction of audio data. The tracking system comprises a transmitting device for transmitting at least one detection signal. The detection signal is a modulated electromagnetic wave having a well-defined phasing. The detection device includes at least one PMD (photonic mixer device) sensor for receiving the at least one detection signal transmitted by the transmitting device and for detecting at least a distance between the PMD sensor and the transmitting device. Either the transmitting device or the detection device is fixed on the headphones. The other one of the transmitting device and the detection device is located at a fixed position. Moreover, the tracking system comprises a processing unit for determining at least one orientation or position parameter of the headphones, based on distance evaluation between the at least one PMD sensor and the transmitting device.

According to a further aspect of the present invention, a method of determining at least an orientation or position of headphones for surround sound reproduction of audio data is provided. In a first step, at least one detection signal is transmitted from a transmitting device. The detection signal is a modulated electromagnetic wave having a well-defined phasing. In a receiving step, the at least one detection signal transmitted by the transmitting device is received at a detection device. The detection device includes at least one PMD (photonic mixer device) sensor. Either the transmitting device or the detection device is fixed on the headphones. The other one of the transmitting device and the detection device is located at a fixed position. In a subsequent detecting step, at least a distance between the PMD sensor and the transmitting device is detected. In a further step, at least one orientation or position parameter of the headphones is determined, based on distance evaluation between the at least one PMD sensor and the transmitting device.

It is the particular approach of the present invention to enable tracking of headphones for surround sound reproduction of audio data based on distance measurement employing photonic mixer device (PMD) technology. PMD technology enables distance measurement between a transmitter attached to the headphones and detectors (PMD sensors) at fixed positions, in a robust manner with comparably low and cheap hardware effort, and with simple post-processing. The approach of the present invention is therefore particularly suitable for use in mass produced tracking systems, such as in the environment of an audio system, for tracking of headphones for an improved simulation of surround sound, taking into account the movement of the head wearing the headphones.

The detection signal employed in the present invention is preferably a signal in the infra-red (IR) frequency range. Although photonic mixing technology is applicable throughout the optical frequency range, infra-red signals are particularly advantageous since these signals do not cause any disturbance through visible or audible signals. Generally, however, any radiation with a wavelength within the spectral range of sensitivity of the used PMD sensor is applicable.

The modulation frequency of diction signals employed in the present invention is preferably in the range from 10MHz to 200MHz. More preferably, the modulation frequency is about 20MHz.

According to a preferred embodiment of the present invention, the PMD based detection device detects the distance by correlating a modulated detection voltage with the detection signal received in the at least one PMD sensor. Therefore, a modulated detection voltage is applied in synchronization with the modulation of the detection signal transmitted from the transmitting device.

Preferably, the tracking system further comprises a signal generator for generating a modulation signal. The modulation signal generated by the signal transmitter is synchronously forwarded to the transmitting device for generating the modulated electromagnetic wave and to the at least one PMD sensor for generating a modulated detection voltage. Thereby, the detection device is provided with a signal that exactly represents the modulation of the electromagnetic detection signal as transmitted, in an easy manner.

More preferably, the modulation signal is forwarded to the transmitting device via a cord.

According to another preferred embodiment of the invention, wherein no connection wire between a device comprising the signal generator and the headphones is available, such as for cordless headphones, the modulation signal is forwarded to the transmitting device via a wireless transmission channel. In the case of cordless headphones, the modulation signal is preferably added to the radio frequency or infra-red carrier transferring the audio data to the headphones.

Preferably, the detection device comprises a plurality of PMD sensors arranged at different positions. Analogously, in a preferred embodiment, the transmitting device comprises a plurality of signal transmitters attached at different positions of the headphones. Alternatively, in an embodiment wherein the detection device is attached to the headphones a plurality of signal transmitters may be located at different fixed positions. More preferably, the signal transmitters emit a detection signal in subsequent periods of time. Thereby, the plural signal transmitters can be distinguished from each other. Consequently, distance between each of the signal transmitters and the at least one PMD sensor can be detected separately, subsequently in time. Further preferably, the detection device includes three PMD sensors forming a predetermined triangular arrangement. Analogously, the transmitting device preferably includes two signal transmitters attached at different positions of the headphones. In the alternative embodiment, the two signal transmitters are located at different fixed positions. More preferably, the transmitting device includes three signal transmitters forming a predetermined triangular arrangement. Still more preferably, the transmitting device includes more than three signal transmitters.

In general, the number of signal transmitters and PMD sensors that a tracking system according to the present invention comprises, depends on the number of geometrical parameters defining orientation and position of a moveable object that is required to be tracked by the tracking system, i.e. the number of degrees of freedom of the moveable object. For a complete determination of orientation and spatial position of a freely moveable 3-dimensional object (6 degrees of freedom), a determination of six independent distances is required. This can be achieved, for instance, with a configuration including three PMD sensors forming a predetermined triangular arrangement, and two signal transmitters fixed at the moveable object so that their distance with respect to each other is fixed and known. However, a situation may occur wherein a particular signal transmitter fixed to the moveable object becomes invisible from the mounting position of the detecting device, and therefore no detection signal can be received from the particular signal transmitter unless it becomes visible again during the motion of the moveable object. Therefore, in order to be able to always precisely determine position and orientation, it is advantageous to include three or even more signal transmitters.

Preferably, the tracking system is capable of determining at least an orientation parameter and a position parameter of the headphones. More preferably, the tracking system is adapted to completely determine orientation and position of the headphones.

On the other hand, the number of degrees of freedom of a moveable object decreases, if less parameters are required due to certain geometrical restrictions which are fulfilled exactly or can be assumed to be fulfilled with sufficient accuracy. In this case, the number of PMD sensors and signal transmitters required for determining the remaining number of parameters decreases. A similar situation also occurs in the case of certain parameters being of no importance in a particular context.

In the simplest case, if only a single orientation parameter is relevant, already detection of a single distance can be sufficient. Accordingly, an alternative preferred embodiment, wherein it is assumed that the moveable object has only a single degree of freedom of motion described by a single orientation parameter, is capable of determining the single orientation parameter, based on detection of a single distance by the detection device. More preferably, the single orientation parameter is a rotation angle around a vertical axis of the moveable object. Such a situation corresponds to the tracking of headphones worn by a person sitting at an approximately fixed position, such as in a vehicle, but frequently rotating his/her head.

Preferably, the tracking system employs light emitting diodes (LED) as signal transmitters. In an alternative preferred embodiment, a semiconductor laser device, such as a vertical-cavity surface-emitting laser (VCSEL), is employed as a signal transmitter. However, the invention is not limited to these exemplary signal transmitters. Generally, any source of radiation capable of being modulated at a sufficiently high speed and generating radiation within the range of sensitivity of the PMD sensors can be used for this purpose.

According to a preferred embodiment of the invention, a tracking system is capable of determining at least the orientation or position of a plurality of headphones. Each of the headphones to be tracked has a transmitting device attached thereto. In order to be distinguished, the detection signals emitted by each of the transmitting devices of the different headphones have different modulation frequencies. By employing signals that are distinguishable by their modulation frequency, plural headphones can be tracked at the same time.

According to a further preferred aspect of the present invention, a vehicle entertainment and information system is provided. The vehicle entertainment and information system comprises headphones for sound reproduction of audio data. The vehicle entertainment and information system further comprises a tracking system according to the first aspect of the present invention. The tracking system is capable of determining at least an orientation or position of the headphones.

Preferably, in the vehicle entertainment and information system, the detection device of the tracking system is mounted on the ceiling of the vehicle, in the middle of the two front seats. Accordingly, the PMD sensors are mounted at a position that allows overlooking the maximum number of possible headphone positions within the vehicle.

Further embodiments of the present invention are the subject matter of the dependent claims.

Additional features and advantages of the present invention will become apparent from the following more particular description, as illustrated in the accompanying drawings, wherein:

Fig. 1 is a simplified scheme of a photonic mixer device (PMD) sensor;

Fig. 2A is a diagram illustrating a modulation voltage employed for distance detection in a PMD sensor;

Fig. 2B and Fig. 2C are diagrams illustrating the voltage distribution in a horizontal dimension of a photonic mixer device as shown in Fig. 1, for different time periods illustrated in Fig. 2A, respectively;

Fig. 2D is a diagram illustrating a simplified example of an intensity modulated detection signal received at a PMD sensor, such as that shown in Fig. 1;

Fig. 3 is an exemplary illustration of a moveable object showing a maximum of 6 degrees of freedom of a 3-dimensional moveable object;

Fig. 4A is a schematic illustration of triangular arrangements of three signal transmitters, and three receivers, respectively, according to an embodiment of the present invention;

Fig. 4B is an exemplary illustration of the principle of position/orientation tracking of a moveable object based on distance measurements;

Fig. 5 is a general scheme-illustrating the determination of coordinates of a point (D) with the help of distance measurements between the point (D) and a plurality of 3 points (A, B, C) having a fixed triangular arrangement with respect to each other;

Fig. 6 is a schematic overview of an embodiment of the present invention; and

Fig. 7 schematically illustrates the determination of a rotation angle in accordance with an embodiment of the present invention.

Illustrative embodiments of the present invention will now be described with reference to the drawings.

The present invention relates to a technique to precisely acquire the distance and hence the exact position/ orientation angle information based on a low number of low cost sensing and emitting devices. The tracking system in accordance with the present invention differs from conventional tracking systems in that it is based on the usage of optical sensor devices founded on PMD technology. These sensors are capable of measuring distances based on a time of flight principle. Therefore, they need a modulated source of optical radiation, preferably in the infra-red frequency range, the phasing of which must be well defined. The solution according to the present invention is very robust, simple in application and comparably cheap. The size of the hardware structure of the present invention is very small, the required electrical power for the sources of radiation is low, and the robustness against poor environmental conditions is very good. Therefore the present invention allows a robust implementation of a head tracking detector that is particularly suitable for an audio system comprising headphones simulating surround sound. The invention is specifically suitable for in-car applications, for instance, for headphones for passengers of a vehicle reproducing DVD or other multi-channel sound sources. However, it is also well suited for home applications, such as 3-D sound generated by a computer (e.g. in connection with computer games), or home cinematography, as well as teleconferencing. It has to be noted that the fields of implementation of the present invention are not limited to these.

A tracking system according to the present invention is particularly advantageous for mass produced systems since the implementation is comparably simple and most efficient.

In the following, the principles of distance detection by employing photonic mixer devices (PMD) as distance sensing elements will be outlined.

A photonic mixer device (PMD) is an optical sensor on a semiconductor basis. Conventionally, an optical sensor is capable of detecting the intensity of incident light. A PMD sensor additionally enables the direct detection of distances.

While conventionally optical sensors only detect brightness information of points, an arrangement of several sensors in lines or arrays allows the receiving of one or two dimensional image information. However, information regarding the third spatial dimension is generally not available. In order to obtain information regarding the third dimension, i.e. distance information, complicated and expensive triangulation-based systems, such as stereo cameras, have been employed. Alternatively, this information can be obtained by evaluating the runtime of light between an emitter and a detector (time-of-flight principle). However, the evaluation processing requires a sophisticated and thus expensive circuitry. Distance detection based on the time-of-flight principle can be considerably simplified by employing photonic mixing devices as optical sensors. A PMD enables performing a signal multiplication (correlation) with a predetermined control voltage, in addition to the conventional radiation detection. Thus, the mixing and correlation processing no longer has to be performed externally, but is integrated in the detector. Thereby, particularly simple and low cost distance detection is enabled.

A default configuration for PMD based distance measurement employs a camera-like configuration. A modulated optical signal (for instance, invisible infra-red light) irradiates an object, which reflects the modulated light signal. A PMD sensor is arranged near the transmitter and receives the light reflected by the object. The PMD sensor is coupled to the modulation source together with the transmitter. Thus, synchronization information with respect to the modulation of the light signal as emitted by the transmitter is available at the PMD sensor. The synchronization information is employed as a reference signal in the PMD sensor, to be correlated with the received modulated optical signal. The electrons generated by the photons in the light sensitive semiconductor area of a photo element are separated, depending on the reference signal, with the help of a so-called "dynamic seesaw" (to be described in more detail below). By performing the simple correlation processing between the optical detection signal and the electronic reference signal, the output signal of the PMD sensor already directly includes distance information.

The overall configuration as outlined above for detecting echo runtime is generally similar to that of a laser radar system. However, by employing a modulated light source having a well-defined phasing, light coherency is not required, and a conventional light source such as a light emitting diode (LED) can be employed.

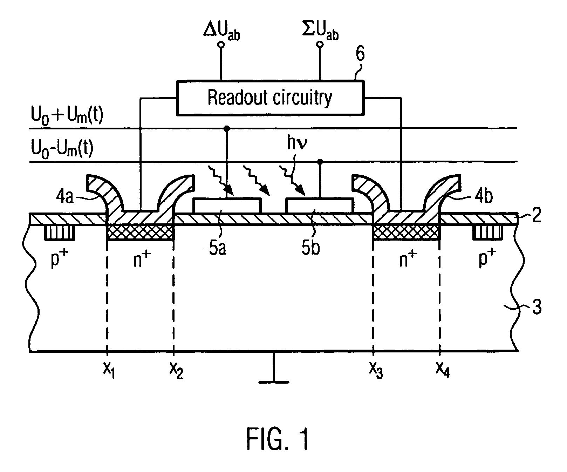

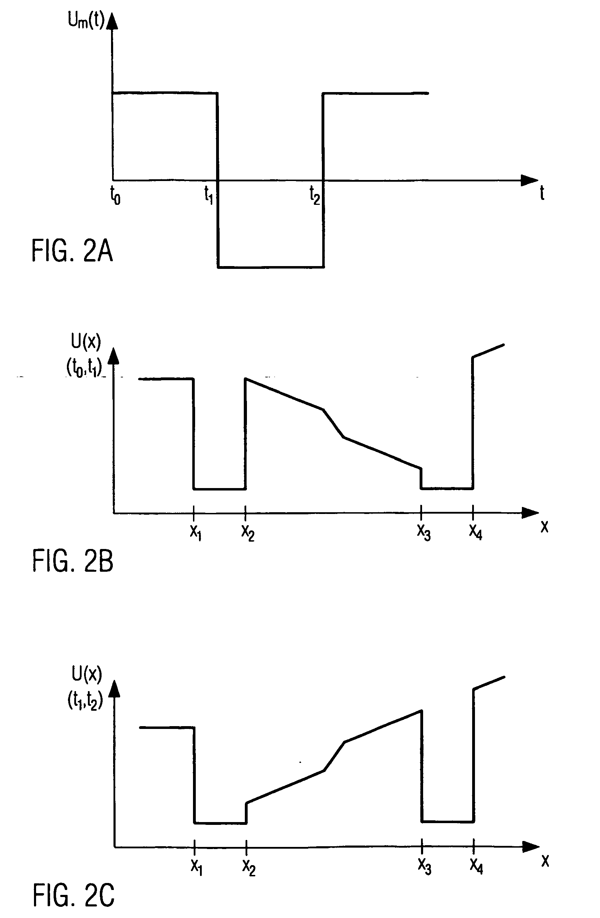

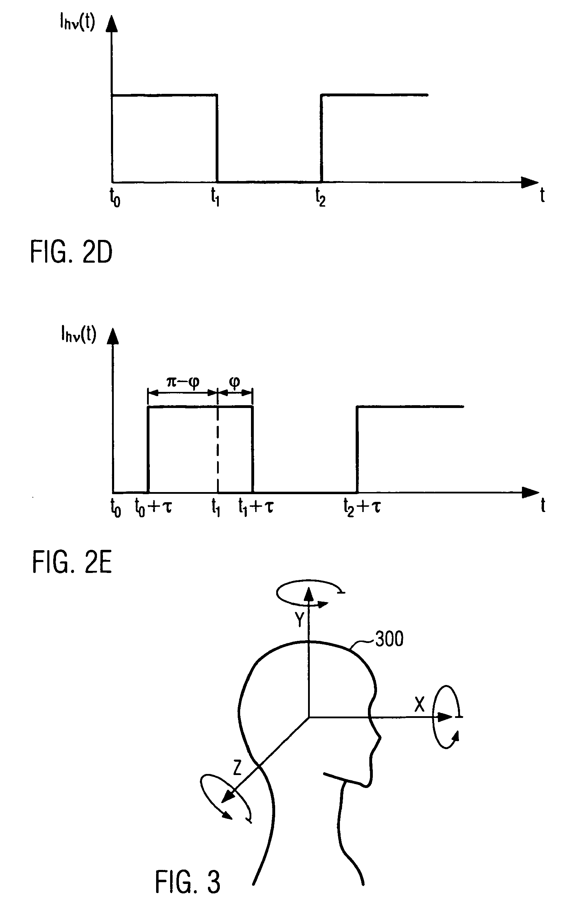

The configuration and operation principle of PMD sensors is generally known in the art. A brief outline of the configuration and operation principle of PMD sensors will be given below with reference to Figs. 1 and 2.

Fig. 1 illustrates a simplified PMD that is based on a p-type silicon substrate 3. An optical input window comprises two semi-transparent modulation electrodes 5a and 5b, isolated from substrate 3 by an oxide layer 2. Two symmetrical output pn-junction diodes on both sides of the input gates are formed by a CMOS self-alignment technology, and are contacted and covered by metal electrodes 4a and 4b. Metal electrodes 4a and 4b are connected to readout circuitry 6.

In a PMD sensor, the movement of charge carriers generated in the light sensitive photo gates can be controlled by a reference voltage being applied to modulation gates 5a and 5b. Therefore, voltage $U_0 + U_m(t)$ is applied to the left modulation electrode 5a, and voltage $U_0 - U_m(t)$ is applied to the right modulation electrode 5b. While $U_0$ is a constant bias voltage, $U_m(t)$ represents a modulation voltage that is synchronized with the modulation of the light intensity of the optical detection signal emitted by an optical signal transmitter. A simple example of a modulation signal $U_m(t)$ (a rectangular signal with a duty cycle of 50%) is illustrated in Fig. 2A.

The charge transport to the left or to the right side can be influenced by the modulated voltages applied to the modulation gates. Namely, the potential distribution in the surface region is influenced by these voltages, leading to an effect known as "dynamic seesaw' for the generated charge carriers. The "dynamic seesaw" is illustrated in Figs. 2B and C. Figs. 2B and 2C illustrate a potential distribution along the horizontal dimension (x-axis) of Fig. 1, for different time intervals with respect to the exemplary modulation voltage $U_m(t)$ of Fig. 2A.

Fig. 2B illustrates the potential distribution along the x-axis during time interval $(t_0, t_1)$ of Fig. 2A. Fig. 2C illustrates the potential distribution along the x-axis for the subsequent modulation interval $(t_1, t_2)$ of Fig. 2A. x-values $x_1$, $x_2$, $x_3$ and $x_4$ marked in Figs. 2B and 2C correspond to the respective values as indicated in Fig. 1.

In accordance with the voltage distribution illustrated in Figs. 2B and 2C, charge carriers generated in the photo-sensitive region (minority carriers, in the illustrated case: electrons) are forced to move towards the left hand side and the right hand side of the PMD element, respectively.

As long as the PMD pixel is irradiated by a constant light, for a rectangular modulation signal with a duty cycle of 50% as illustrated in Fig. 2A, accordingly the generated charge carriers within a complete modulation period move to the left and the right side equally.

If, however, the incident light is also modulated (for instance, also as a rectangular signal), and there is no phase delay between modulation of light and detection voltage, then all charge carriers will be moved to only one of the readout diodes. Such a situation corresponds to the light intensity distribution shown in Fig. 2D. Light intensity $I_{hv}(t)$ is illustrated to have a simplified time dependence, so that light is received only during time interval $(t_0, t_1)$, while no light is received during the time period $(t_1, t_2)$. Accordingly, light is irradiated and charge carriers are generated only during a single one of the time periods having different voltage distributions illustrated in Figs. 2B and 2C (in this case, the time period of Fig. 2B), and all charge carriers are transported to one readout electrode (in this case: the left hand side). If, however, there is phase delay between the modulation of the light and the electrical reference signal, different amounts of charge carriers will drift to the left hand side and the right hand side of readout electrodes 4a and 4b, respectively. Such a situation corresponds to a case, wherein light that has been modulated in synchronization with modulation voltage $U_m(t)$ is received after a certain runtime $\tau$. A respective intensity distribution of received light is illustrated in Fig. 2E.

Time $\tau$ indicated in Fig. 2E unambiguously corresponds to modulation phase delay $\varphi$, according to the simple formula $\varphi = 2\pi\,\tau/T$, wherein T is the modulation period. In the illustrated case, modulation period T is $T = t_2 - t_0$.

Readout circuitry 6 is capable of providing the overall output of both readout gates 4a and 4b, $\Sigma U_{ab}$ (i.e. the data registered by a conventional optical sensor), as well as the difference $\Delta U_{ab}$. This data can be used to calculate the length of the optical path of the light from transmitter to PMD sensor.

The distance d to be measured is related to phase delay $\varphi$ by the simple formula

$$d = \varphi\, c/(2\pi\, f_{mod}) \quad \text{(Formula 1)}$$

wherein $f_{mod}$ represents the modulation frequency and c is the velocity of light. It has to be noted that in the default configuration as outlined above, wherein light transmitted by a transmitter arranged nearby the PMD sensor and reflected by an object is received (echo measurement), distance d corresponds to twice the distance between PMD sensor and object, since the optical path of the detection signal corresponds to twice the distance between signal and object.

It is further noted that the maximum distance that can be unambiguously measured according to the operation principle as outlined above, corresponds to modulation wavelength $\lambda_{mod}$ (½ $\lambda_{mod}$ in the case of echo measurement).

On the other hand, the ratio of charge carriers moved to the left hand readout electrode 4a and the right hand readout electrode 4b, respectively, and thus differential readout voltage $\Delta U_{ab}$ unambiguously corresponds to phase delay φ. Namely, as can be seen from Fig. 2E, during a complete modulation cycle, the amount of generated charge carriers drifting to the left hand side and the right hand side, respectively, corresponds to the ratio of the time period during which light is incident, while the value of modulation voltage $U_m(t)$ is "high", to the time period when light is incident, while the value of modulation voltage $U_m(t)$ is "low". As can be seen from Figs. 2A and 2E, in the illustrated simplified example the ratio is R = $(\pi - \varphi)/\varphi$.

It is moreover noted that the simplified case of rectangular modulation is illustrated herein for simplicity only. In practical implementations, a plurality of other kinds of modulation having a well defined phasing is possible. Generally, the readout differential voltage $\Delta U_{ab}$ corresponds to a correlation function (mathematically: a convolution) between modulation-voltage $U_m(t)$ and phase delayed received optical signal. Within the above indicated distance limitation (up to one modulation wavelength $\lambda_{mod}$), a correlation value unambiguously corresponds to the phase delay, i.e. to the distance to be measured.

For an application of a PMD sensor in a tracking system according to the present invention, however, an echo-based configuration as outlined above is inappropriate. In 3D camera applications, light is emitted non-directionally, and reflected from a scene, generally comprising a plurality of objects. The reflected light is received by an imaging apparatus comprising an array of PMD pixels, each receiving and processing light reflected from a particular portion of the scene.

To the contrary, the present invention does not aim to capture an image of a complete scene, but to precisely measure distances between a PMD element and particular predetermined points of a predetermined moveable object, in order to determine orientation and/or position parameters corresponding to the degrees of freedom of the moveable object. An echo based detection scheme would therefore additionally require specific reflector elements mounted at the predetermined points of the moveable object to be used for measurement. Since the available low cost emitting devices, such as LED are omni-directional, only a rather small portion of the emitted signal power would be detected at all. Large losses of power would, however, require a considerable increase in the overall signal power, in contrast to the desire of a low cost tracking system for mass produced consumer devices, requiring as little power as possible.

Therefore, according to the present invention, a modulated detection signal is transmitted from a first predetermined location, and detected by a PMD sensor mounted at a second predetermined location. According to a preferred embodiment, the first predetermined location is at the movable object, and the second predetermined location is a fixed position with respect to a predetermined space. Orientation and position of the movable object is thereby determined with respect to this predetermined space as a reference frame. Such a predetermined space may be, for instance, a room in a flat, as well as the interior of an arbitrarily moving vehicle.

However, the present invention is not restricted to the case of the PMD sensor (generally: the detection device including at least one PMD sensor) fixed in the predetermined space and the transmission device movable together with the object to be tracked. A person skilled in the art is aware that due to the feature of reciprocity of transmission of electromagnetic signals, in an alternative embodiment, the transmission device can be fixed in the predetermined space, while the detection device is fixed on the movable object.

The configuration employed in the present invention requires an exact synchronization between the signal transmitter attached to the moveable object and the PMD sensor, in order to apply a detection voltage (reference voltage $U_m(t)$) having exactly the same phasing as the optical detection signal at the moment of emission. This can be easily achieved in case of transmitting the modulation signal via a cord. It is sufficient to determine the phase offset once. Since the cord length is constant, also the phase offset is a constant parameter that can be fixed in the tracking system.

A more complicated situation occurs in an embodiment, wherein the modulation signal is transmitted via a wireless channel, since in that case the signal transit time depends on the current distance between sender and receiver. Accordingly, the phase offset is variable. Therefore, an additional measurement of the phase offset is required. This can be achieved by a PLL (phase-locked loop) at the location of the transmitting device. The PLL is employed to measure the phase offset, preferably periodically during operation of the tracking system. A further exemplary way to achieve synchronization employs an additional PMD sensor element proximate to the transmitting device and an additional transmitter proximate to the receiving device. Thereby, transit time plus local processing can be measured twice in a simple manner, in order to determine a base distance information for one point.

Fig. 3 illustrates the maximum of six degrees of freedom of a 3-dimensional object 300 (in this case a human head, which may be a head wearing headphones for reproducing surround sound) really moveable in space. The illustrated six degrees of freedom comprise three degrees of freedom of translation and three degrees of freedom of rotation. The three degrees of freedom of translation correspond to the components of movement of the moveable object as a whole along the directions of 3 axes in space that are perpendicular to each other. These axes are designated as X, Y and Z, respectively, in Fig. 3. As indicated by the ring-shaped arrows in Fig 3, three rotational degrees of freedom correspond to a rotation of the moveable object as a whole around one of the fixed axes X, Y and Z. Usually, rotation around the X-axis is called pitch, rotation around the Y-axis is called yaw and rotation around the Z-axis is called roll. Accordingly, in the example of Fig. 3 yaw rotation corresponds, for instance, to spinning in a swivel chair, pitch rotation corresponds, for instance, to nodding from side to side, and a roll rotation corresponds to nodding the head back and forth.

It is well known from general mechanics that every rotation of a moveable object can be composed from a superposition of rotations around three fixed orthogonal axes. Therefore, six degrees of freedom of motion described by six parameters are sufficient to completely describe motion of a 3-dimensional object. While the particular parameters employed to completely describe the orientation and position of a moveable object in accordance with six degrees of freedom may vary from case to case, the overall number of independent parameters thus does not exceed six. However, in many cases possible motion is further restricted or can be assumed to be restricted in a sufficiently good approximation, so that the actual number of degrees of freedom and respective number of parameters to be determined by a tracking system is further reduced.

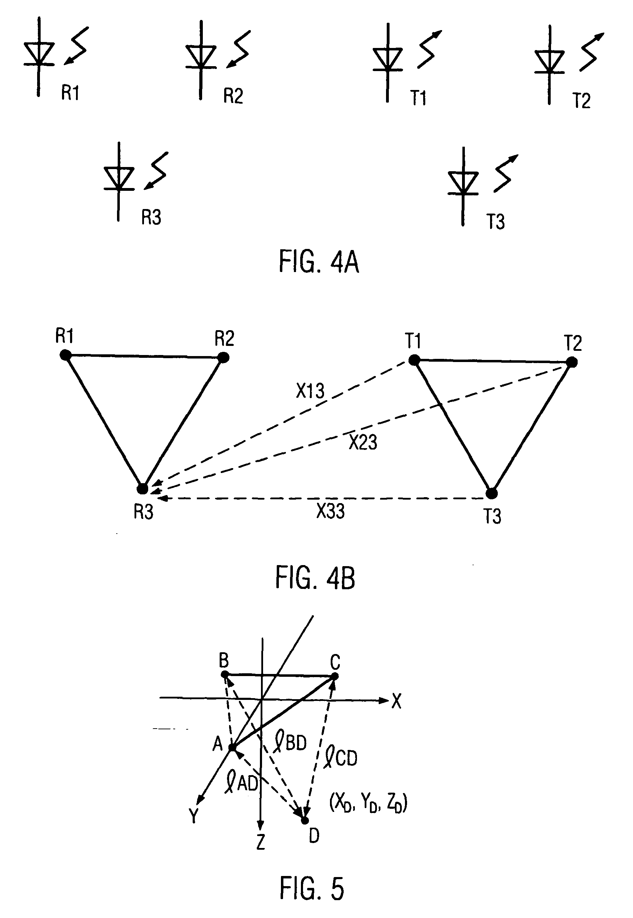

Fig. 4A and 4B illustrate the geometrical configuration of a tracking system according to a preferred embodiment of the present invention. The system consists of the three transmitters T1, T2 and T3 and the three receivers R1, R2 and R3. The three transmitters T1, T2 and T3 are attached to the moveable object at predetermined fixed points of the moveable object forming a triangular arrangement. Each of the three signal transmitters T1, T2 and T3 comprises an inexpensive infra-red light emitter, capable of emitting modulated detection signals having a well defined phasing.

Each of the three receivers R1, R2 and R3 being mounted at predetermined fixed positions in space forming a triangular arrangement comprises a PMD sensor, i.e. a single PMD pixel generally having a similar structure as in the example described with reference to Fig. 1.

Each receiver Rj (j =1,2,3)-receives three distance rays X1j, X2j, and X3j that allow the detection of the distances between each of PMD sensors R1, R2 and R3 to each of the signal transmitters T1, T2 and T3. For the sake of simplicity, Fig. 4B illustrates only the distance rays received by receiver R3 (the arrows X13, X23 and X33 in Fig. 4B). On the basis of the detected distances, the exact position of the transmitters T1, T2 and T3 in space can be detected, and thus the motion of the moveable object can be tracked. The relative positions of the receivers Rj as well as the relative positions of the transmitters Tj are fixed and known in advance, since these arrangements form a predetermined triangular arrangement as indicated above.

In order to distinguish detection signals transmitted from each of the transmitters T1, T2 and T3, distance measurement is performed subsequently for each of the three transmitters. Therefore, each of the three transmitters emits a detection signal subsequently in time. Since the overall time resolution achieved on the basis of subsequent distance detection is sufficient for an application such as head tracking in an audio environment, additional effort for distinguishing different transmitters by technical means such as variation of modulation frequencies of each transmitter attached to a single moveable object can be avoided. However, distinguishing detection signals transmitted by several signal transmitters is generally possible in the framework of the present invention and is preferably employed, for instance, in a situation wherein several moveable objects are to be tracked within a tracking system according to the present invention.

Fig. 5 schematically illustrates complete determination of the coordinates $(X_D, Y_D, Z_D)$ of a single transmitter D. It is assumed that three receivers (PMD sensors) A, B and C having coordinates $(X_A, Y_A, Z_A)$, $(X_B, Y_B, Z_B)$ and $(X_C, Y_C, Z_C)$, respectively (not shown), are arranged in a fixed triangular arrangement. If distances $l_{AD}, l_{BD}, l_{CD}$ are determined by the respective PMD sensor, three geometric equations are available for determining the three unknown coordinates $X_D, Y_D$ and $Z_D$.

$$
\begin{aligned}
(X_D - X_A)^2 + (Y_D - Y_A)^2 + (Z_D - Z_A)^2 &= l^2{}_{AD} \\
(X_D - X_B)^2 + (Y_D - Y_B)^2 + (Z_D - Z_B)^2 &= l^2{}_{BD} \qquad \text{Formula (2)} \\
(X_D - X_C)^2 + (Y_D - Y_C)^2 + (Z_D - Z_C)^2 &= l^2{}_{CD}
\end{aligned}
$$

In a preferred embodiment (cf. Fig. 4), it is further assumed that two additional transmitters E and F exist (not shown for simplicity), so that transmitters D, E and F form a fixed triangular arrangement with respect to each other. Accordingly, equivalent equations are also valid for the coordinates of the additional transmitters E and F. In total, nine equations and nine distance measurements are possible. However, as described with reference to Fig. 3, a fixed triangular arrangement has only six degrees of freedom of motion, so that only six of the unknown coordinates can be changed independently, while the other coordinates are predetermined by the geometry of the triangular detector arrangement. Therefore, an arrangement employing three PMD sensors and three signal transmitters leads, in principle, to an over-determined system of equations. In general, for instance, an arrangement having only two transmitters would be sufficient. Such an arrangement produces six equations, from which sufficient information for six degrees of freedom can be obtained.

However, an embodiment including three or even more transmitters is nevertheless preferred, since a situation may occur wherein due to motion of the moveable objects to be tracked, the direct line of sight between a particular transmitter and the sensor arrangement (detection device) may become lost. In order to be capable of further precisely tracking the moveable object, therefore, a certain amount of redundancy is advantageous.

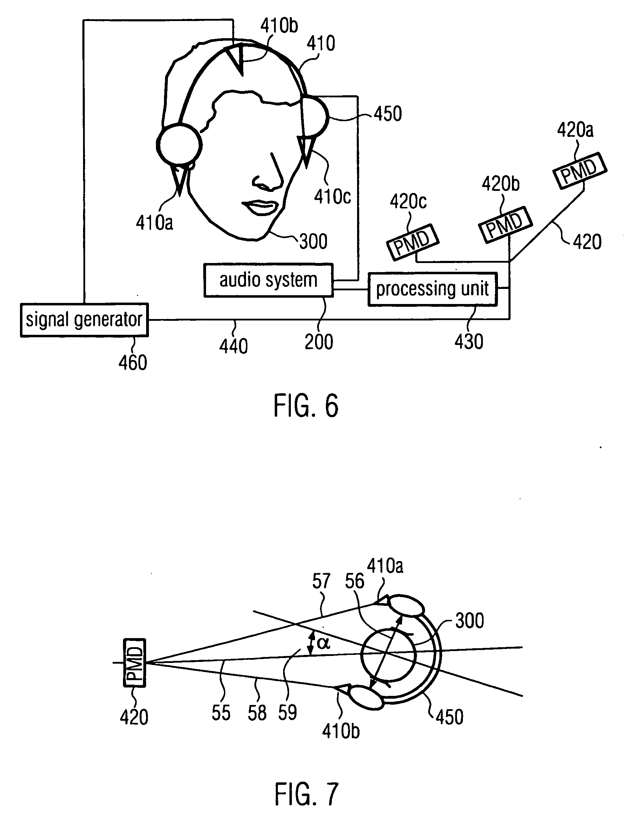

Fig. 6 illustrates an overall scheme of embodiment of a tracking system according to the present invention employed in the environment of an audio system 200. The audio system 200 is connected to headphones 450 worn by a user 300. Headphones 450 constitute a moveable object to be tracked by the tracking system 200. Audio system 200 further comprises the components known in the art, such as a receiving unit, CD/DVD recording and reproduction device, an amplifier, and loudspeakers. However the possible number and kind of components for audio system 200 is not restricted to these. For instance, together with audio system 200 also video components including one or a plurality of video display devices may be employed.

The illustrated components of the tracking system comprise a signal generator 460, which is connected to transmitting device 410 comprising three transmitters 410a, 410b and 410c. Transmission device 410 is fixed with respect to the headphones 450. Detection device 420 comprises three detectors 420a, 420b and 420c at a fixed position of the room. The detection device 420 is electrically connected to a processing unit 430 for evaluating a signal output detected by the detection device 420. Signal synchronization is achieved by additionally connecting signal generator 460 to detection device 420 via line 440. As outlined above, the particular implementation of the connection between signal generator 460 and transmitting device 410 is not limited to a cabling, but connection may be implemented via a wireless transmission line as well.

As indicated above, the illustrated number of three transmitters and three detectors each forming a triangular arrangement is not essential for the present invention. A person skilled in the art is aware that depending on the number of degrees of freedom to be actually determined, at least one transmitter and one sensor is required.

Every individual detection signal transmitted by individual transmitter 410a, 410b or 410c is individually detected by sensors 420a, 420b and 420c. In the illustrated case, therefore a maximum of nine individual distances (from every one of three transmitters to every one of three sensors) can be measured. As the positions of the sensors 420a, 420b and 420c are assumed to be fixed in a predetermined space, the processing unit 430 is capable of determining the position and orientation of the moveable object 450 with respect to the predetermined space (described in more detail above with reference to Figs. 4 and 5).

As indicated above, the invention is applicable to an alternative embodiment, wherein the transmission device is fixed in the predetermined reference space, and the detection device (PMD) is located at the movable object (not shown in the drawings). In that case, the connection between detector and processing unit may be accomplished by a wireless transmission channel (for instance, if the movable object is wireless headphones), instead of an electrical connection. Also, the processing unit or a part thereof can be included in the movable object.

In the following, an exemplary embodiment for determining a single orientation parameter $\alpha$, will be explained with reference to Fig. 7.

Fig. 7 schematically illustrates a head 300 wearing a pair of headphones 450, wherein each of the headphones is equipped with a small signal transmitter 410a and 410b. PMD sensor 420 for detecting a signal transmitted from either transmitter 410a or 410b is arranged in front of the person wearing the headphones. In the illustrated case, it is assumed that the movement of the head of the person to be tracked is restricted to a rotation around a single axis (perpendicular to the plane of the drawing), and a variation of the overall distance between the centre of the head and the position of the PMD sensor 420, in good approximation. Distances between transmitter 410a and sensor 420 via path 57 and between transmitter 410b and sensor 420 via path 58 are measured. If distance 56 between both headphones 410a and 410b is moreover known, orientation $\alpha$ (59) can be easily determined by triangulation based on the distances 57 and 58. Additionally, the overall distance is given by the average of distances 57 and 58. If, moreover, also the overall distance 55 between the central portion of the head and the sensor is assumed to be fixed, in the configuration employing only a single transmitter, such as transmitter 410a, would be sufficient. As a person skilled in the art is aware of how to determine the orientation angle by triangulation, a detailed description thereof is omitted here.

In summary, the present invention relates to a tracking system and method for determining at least an orientation or position of a moveable object, on the basis of PMD-based distance detection technology. As a detection signal, a modulated electromagnetic wave, preferably in the IR frequency range, is employed. The detection signal is transmitted from at least one predetermined position of the moveable object to be tracked. A detection device comprising at least one PMD sensor is located at a fixed position with respect to the reference frame used for determining orientation and position of the moveable object. The number of transmitters and sensors employed depends on the number of degrees of freedom to be tracked. Particularly preferred embodiments employ three PMD sensors and two or more signal transmitters. A tracking system according to the present invention is based on simple and inexpensive hardware. It can therefore be particularly advantageously used for mass produced devices, such as in an audio system for reproducing surround sound with headphones, for instance, in a vehicle entertainment and information system.

**Claims**

1. A tracking system for determining at least an orientation or position of headphones (450) for surround sound reproduction of audio data, the tracking system comprising:

    a transmitting device (410) for transmitting at least one detection signal,
    a detection device (420), wherein either the transmitting device (410) or the detection device (420) being fixed on said headphones (450), and the other one of said transmitting device (410) and said detection device (420) being located at a fixed position, and
    a processing unit (430) for determining at least one orientation or position parameter of said headphones (450);

    **characterized in that**
    said detection signal being a modulated electromagnetic wave having a well-defined phasing,
    said detection device (420) including at least one PMD sensor (420a, 420b, 420c) for receiving the at least one detection signal transmitted by said transmitting device (410) and for detecting at least a distance (X13, X23, X33; $I_{AD}$, $I_{BD}$, $I_{CD}$) between said PMD sensor (420a, 420b, 420c) and said transmitting device (410); and
    said processing unit determining said at least one orientation or position parameter based on said distance between said at least one PMD sensor (420a, 420b, 420c) and said transmitting device (410).

2. A tracking system according to claim 1, wherein said at least one detection signal being an infra-red signal.

3. A tracking system according to claim 1 or 2, wherein said at least one detection signal being modulated at a modulation frequency in the range from 10MHz to 200MHz.

4. A tracking system according to claim 3, wherein said modulation frequency being approximately 20MHz.

5. A tracking system according to any of claims 1 to 4, wherein said detection device (420) detecting said distance (X13, X23, X33; $I_{AD}$, $I_{BD}$, $I_{CD}$) by correlating a modulated detection voltage ($U_m(t)$) applied in said at least one PMD sensor (420a, 420b, 420c) with the received detection signal ($I_{hv}(t)$) and wherein said modulated detection voltage ($U_m(t)$) being synchronized with the modulation of the detection signal transmitted from the transmitting device (410).

6. A tracking system according to any of claims 1 to 5, further comprising a signal generator (460) for generating a modulation signal, said modulation signal being synchronously forwarded to said transmitting device (410) for generating said modulated electromagnetic wave and to said at least one PMD sensor (420a, 420b, 420c) for generating a modulated detection voltage ($U_m(t)$).

7. A tracking system according to claim 6, wherein said modulation signal is forwarded to said transmitting device (410) via a cord.

8. A tracking system according to claim 6, wherein said headphones being cordless headphones (450), and said modulation signal being forwarded to said transmitting device (410) fixed on said headphones (450) by being added to the radio frequency or infra-red carrier transferring the audio data to the headphones (450).

9. A tracking system according to any of claims 1 to 8, wherein said detection device (420) comprising a plurality of PMD sensors (420a, 420b, 420c) arranged at different positions (R1, R2, R3; D).

10. A tracking system according to any of claims 1 to 9, wherein said transmitting device (410) comprising a plurality of signal transmitters (410a, 410b, 410c) being attached at different positions (T1, T2, T3; A, B, C).

11. A tracking system according to claim 10, wherein said signal transmitters (410a, 410b, 410c) emitting a detection signal in subsequent periods of time, in order to detect distances (X13, X23, X33; $I_{AD}$, $I_{BD}$, $I_{CD}$) between each of said signal transmitters (410a, 410b, 410c) and said at least one PMD sensor (420a, 420b, 420c) subsequently in time.

12. A tracking system according to any of claims 1 to 11, wherein said processing unit (430) being adapted to determine at least one orientation parameter ($\alpha$) and at least one position parameter (x; y; z) of said headphones (450).

13. A tracking system according to claim 12, wherein said detection device (420) including three PMD sensors (420a, 420b, 420c) forming a predetermined triangular arrangement (R1R2R3).

14. A tracking system according to claim 12 or 13, wherein said transmitting device (410) including two signal transmitters (410a, 410b) attached at different positions (T1, T2; A, B).

15. A tracking system according to claim 12 or 13, wherein said transmitting device (410) including three signal transmitters (410a, 410b, 410c) forming a predetermined triangular arrangement (T1T2T3; ABC).

16. A tracking system according to claim 15, wherein said transmitting device (410) including more than three signal transmitters.

17. A tracking system according to any of claims 1 to 16 being adapted to completely determine orientation and position of said headphones (450).

18. A tracking system according to any of claims 1 to 8, wherein said processing unit being adapted to determine a single orientation parameter ($\alpha$), based on detection of a single distance (X13, X23, X33; $I_{AD}$, $I_{BD}$, $I_{CD}$) by said detection device (420), assuming that said movable object (300) having only a single degree of freedom of motion described by said single orientation parameter ($\alpha$).

19. A tracking system according to claim 18, wherein said single orientation parameter ($\alpha$) being a rotation angle around a vertical axis (y) of said headphones (450).

20. A tracking system according to any of claims 1 to 19, wherein said transmitting device (410) including an LED.

21. A tracking system according to any of claims 1 to 19, wherein said transmitting device (410) including a semiconductor laser device.

22. A tracking system according to any of claims 1 to 21, being adapted to determine at least orientation or position of a plurality of headphones (450) each having a transmitting device (410) attached thereto, wherein the detection signals emitted by each of said transmitting devices (410) being distinguished by having different modulation frequencies.

23. A vehicle entertainment and information system comprising:

headphones (450) for sound reproduction of audio data, and
a tracking system according to any of claims 1 to 22 for determining at least an orientation or position of said headphones (450).

24. A vehicle entertainment and information system according to claim 23, wherein said detection device (420) being mounted at the ceiling of the vehicle, in the middle of the two front seats.

25. A method of determining at least an orientation or position of headphones (450) for surround sound reproduction of audio data, the method comprising the steps of:

transmitting at least one detection signal from a transmitting device (410), said detection signal being a modulated electromagnetic wave having a well-defined phasing,
receiving the at least one detection signal transmitted by said transmitting device (410) at a detection device (420) including at least one PMD sensor (420a, 420b, 420c), wherein either the transmitting device (410) or the detection device (420) being fixed on said headphones (450), and the other one of said transmitting device (410) and said detection device (420) being located at a fixed position,
detecting at least a distance (X13, X23, X33; $I_{AD}$, $I_{BD}$, $I_{CD}$) between said PMD sensor (420a, 420b, 420c) and said transmitting device (410), and
determining at least one orientation or position parameter of said headphones (450) based on said distance between said at least one PMD sensor (420a, 420b, 420c) and said transmitting device (410).

26. A method according to claim 25, wherein said at least one detection signal being an infra-red signal.

27. A method according to claim 25 or 26, wherein said at least one detection signal being modulated at a modulation frequency in the range from 10MHz to 200MHz.

**28.** A method according to claim 27, wherein said modulation frequency being approximately 20MHz.

**29.** A method according to any of claims 25 to 28, wherein said detecting step detecting said distance (X13, X23, X33; $I_{AD}$, $I_{BD}$, $I_{CD}$) by correlating a modulated detection voltage ($U_m(t)$) applied in said at least one PMD sensor (420a, 420b, 420c) with the received detection signal ($I_{hv}(t)$) and wherein said modulated detection voltage ($U_m(t)$) being synchronized with the modulation of the

**30.** A method according to any of claims 25 to 29, further comprising the steps of
generating a modulation signal, and
synchronously forwarding said modulation signal to said transmitting device (410) for generating said modulated electromagnetic wave and to said at least one PMD sensor (420a, 420b, 420c) for generating a modulated detection voltage ($U_m(t)$).

**31.** A method according to claim 30, wherein said modulation signal is forwarded to said transmitting device (410) via a cord.

**32.** A method according to claim 30, wherein said headphones being cordless headphones (450), and said modulation signal being forwarded to said transmitting device (410) fixed on said headphones (450) by being added to the radio frequency or infra-red carrier transferring the audio data to the headphones (450).

**33.** A method according to any of claims 25 to 32, wherein said detection step detecting distances between said transmitting device and a plurality of PMD sensors (420a, 420b, 420c) located at different positions (R1, R2, R3; D).

**34.** A method according to any of claims 25 to 33, wherein said transmitting device (410) comprising a plurality of signal transmitters (410a, 410b, 410c) being attached at different positions (T1, T2, T3; A, B, C).

**35.** A method according to claim 34, wherein
in said transmitting step said signal transmitters (410a, 410b, 410c) transmitting a detection signal in subsequent periods of time, and
said detecting step detecting distances (X13, X23, X33; $I_{AD}$, $I_{BD}$, $I_{CD}$) between each of said signal transmitters (410a, 410b, 410c) and said at least one PMD sensor (420a, 420b, 420c) subsequently in time.

**36.** A method according to any of claims 25 to 35, wherein said determining step determining at least one orientation parameter ($\alpha$) and at least one position parameter (x; y; z) of said headphones (450).

**37.** A method according to claim 36, wherein said detecting step detecting distances between said transmitting device (410) and three PMD sensors (420a, 420b, 420c) forming a predetermined triangular arrangement (R1R2R3).

**38.** A method according to claim 36 or 37, wherein said transmitting device (410) including two signal transmitters (410a, 410b) attached at different positions (T1, T2; A, B).

**39.** A method according to claim 36 or 37, wherein said transmitting device (410) including three signal transmitters (410a, 410b, 410c) forming a predetermined triangular arrangement (T1T2T3; ABC).

**40.** A method according to claim 39, wherein said transmitting device (410) including more than three signal transmitters.

**41.** A method according to any of claims 25 to 40, completely determining orientation and position of said headphones (450).

**42.** A method according to any of claims 25 to 32, wherein said detecting step detecting a single distance (X13, X23, X33; $I_{AD}$, $I_{BD}$, $I_{CD}$), and said determining step determining a single orientation parameter ($\alpha$), assuming that said headphones (450) having only a single degree of freedom of motion described by said single orientation parameter ($\alpha$).

**43.** A method according to claim 42, wherein said single orientation parameter ($\alpha$) being a rotation angle around a vertical axis (y) of said headphones (450).

**44.** A method according to any of claims 25 to 43, wherein said transmitting device (410) including an LED.

**45.** A method according to any of claims 25 to 43, wherein said transmitting device (410) including a semiconductor laser device.

**46.** A method according to any of claims 25 to 45, determining at least orientation or position of a plurality of headphones (450) each having a transmitting device (410) attached thereto, wherein
in said transmitting step each of said transmitting devices (410) transmitting detection signals being distinguished by having different modulation frequencies.

**Patentansprüche**

**1.** Verfolgungssystem (original: tracking system) zum Bestimmen wenigstens einer Orientierung oder Position eines Kopfhörers (450) zur Surround-Tonwiedergabe von Audiodaten, wobei das Verfolgungssystem umfasst:

ein Übertragungsgerät (410) zum Übertragen wenigstens eines Erkennungssignals,
ein Erkennungsgerät (420), wobei entweder das Übertragungsgerät (410) oder das Erkennungsgerät (420) an dem Köpfhörer (450) fixiert ist und das jeweilige andere von dem Übertragungsgerät (410) und dem Erkennungsgerät (420) sich an einer festen Position befindet, und
eine Verarbeitungseinheit (430) zum Bestimmen wenigstens eines Orientierungs- oder Positionsparameters des Kopfhörers (450);

**dadurch gekennzeichnet, dass**
das Erkennungssignal eine modulierte elektromagnetische Welle mit einer wohldefinierten Phase ist,
das Erkennungsgerät (420) wenigstens einen PMD-Sensor (420a, 420b, 420c) zum Empfangen des wenigstens einen von dem Übertragungsgerät (410) übertragenen Erkennungssignals und zum Erkennen wenigstens eines Abstandes (X13, X23, X33; $I_{AD}$, $I_{BD}$, $I_{CD}$) zwischen dem PMD-Sensor (420a, 420b, 420c) und dem Übertragungsgerät (410) enthält; und
die Verarbeitungseinheit den wenigstens einen Orientierungs- oder Positionsparameter basierend auf dem Abstand zwischen dem wenigstens einen PMD-Sensor (420a, 420b, 420c) und dem Übertragungsgerät (410) bestimmt.

**2.** Verfolgungssystem nach Anspruch 1, wobei das wenigstens eine Erkennungssignal ein Infrarotsignal ist.

**3.** Verfolgungssystem nach Anspruch 1 oder 2, wobei das wenigstens eine Erkennungssignal mit einer Modulationsfrequenz im Bereich von 10 MHz bis 200 MHz moduliert ist.

**4.** Verfolgungssystem nach Anspruch 3, wobei die Modulationsfrequenz ungefähr 20 MHz ist.

**5.** Verfolgungssystem nach einem der Ansprüche 1 bis 4, wobei das Erkennungsgerät (420) den Abstand (X13, X23, X33; $I_{AD}$, $I_{BD}$, $I_{CD}$) durch Korrelieren einer modulierten Erkennungsspannung ($U_m(t)$), die in dem wenigstens einen PMD-Sensor (420a, 420b, 420c) angelegt wird, mit dem empfangenen Erkennungssignal ($I_{hv}(t)$) erkennt, und wobei die modulierte Erkennungsspannung ($U_m(t)$) mit der Modulation des von dem Übertragungsgerät (410) übertragenen Erkennungssignals synchronisiert ist.

**6.** Verfolgungssystem nach einem der Ansprüche 1 bis 5, weiterhin umfassend einen Signalerzeuger (460) zum Erzeugen eines Modulationssignals, wobei das Modulationssignal synchron an das Übertragungsgerät (410) zum Erzeugen der modulierten elektromagnetischen Welle und an den wenigstens einen PMD-Sensor (420a, 420b, 420c) zum Erzeugen einer modulierten Erkennungsspannung ($U_m(t)$) weitergeleitet wird.

**7.** Verfolgungssystem nach Anspruch 6, wobei das Modulationssignal an das Übertragungsgerät (410) über eine Schnur weitergeleitet wird.

**8.** Verfolgungssystem nach Anspruch 6, wobei der Kopfhörer ein schnurloser Kopfhörer (450) ist, und das Modulationssignal an das an dem Köpfhörer (450) fixierte Übertragungsgerät (410) weitergeleitet wird, indem es dem radiofrequenten oder infraroten Träger, der die Audiodaten an den Kopfhörer (450) überträgt, hinzugefügt wird.

**9.** Verfolgungssystem nach einem der Ansprüche 1 bis 8, wobei das Erkennungsgerät (420) eine Mehrzahl von PMD-Sensoren (420a, 420b, 420c) umfasst, die an unterschiedlichen Positionen (R1, R2, R3; D) angeordnet sind.

**10.** Verfolgungssystem nach einem der Ansprüche 1 bis 9, wobei das Übertragungsgerät (410) eine Mehrzahl von Signalübertragern (410a, 410b, 410c) umfasst, die an unterschiedlichen Positionen (T1, T2, T3; A, B, C) angebracht sind.

**11.** Verfolgungssystem nach Anspruch 10, wobei die Signalübertrager (410a, 410b, 410c) ein Erkennungssignal in aufeinander folgenden Zeiträumen aussenden, um Abstände (X13, X23, X33; $I_{AD}$, $I_{BD}$, $I_{CD}$) zwischen jedem der Signalübertrager (410a, 410b, 410c) und dem wenigstens einem PMD-Sensor (420a, 420b, 420c) zeitlich aufeinander folgend zu erkennen.

**12.** Verfolgungssystem nach einem der Ansprüche 1 bis 11, wobei die Verarbeitungseinheit (430) angepasst ist, wenigstens einen Orientierungsparameter ($\alpha$) und wenigstens einen Positionsparameter (x; y; z) des Kopfhörers (450) zu bestimmen.

**13.** Verfolgungssystem nach Anspruch 12, wobei das Erkennungsgerät (420) drei PMD-Sensoren (420a, 420b, 420c) enthält, die eine vorbestimmte Dreiecksanordnung (R1 R2R3) bilden.

**14.** Verfolgungssystem nach Anspruch 12 oder 13, wobei das Übertragungsgerät (410) zwei Signalübertrager (410a, 410b) enthält, die an unterschiedlichen Positionen (T1, T2; A, B) angebracht sind.

**15.** Verfolgungssystem nach Anspruch 12 oder 13, wobei das Übertragungsgerät (410) drei Signalübertrager (410a, 410b, 410c) enthält, die eine vorbestimmte Dreiecksanordnung (T1T2T3; ABC) bilden.

**16.** Verfolgungssystem nach Anspruch 15, wobei das Übertragungsgerät (410) mehr als drei Signalübertrager enthält.

**17.** Verfolgungssystem nach einem der Ansprüche 1 bis 16, angepasst zum vollständigen Bestimmen von Orientierung und Position des Kopfhörers (450).

**18.** Verfolgungssystem nach einem der Ansprüche 1 bis 8, wobei die Verarbeitungseinheit angepasst ist, einen einzigen Orientierungsparameter ($\alpha$) zu bestimmen, beruhend auf der Erkennung eines einzigen Abstands (X13, X23, X33; $I_{AD}$, $I_{BD}$, $I_{CD}$) mit dem Erkennungsgerät (420), unter der Annahme, dass das bewegliche Objekt (300) nur einen einzigen Bewegungsfreiheitsgrad hat, der durch den einzigen Orientierungsparameter ($\alpha$) beschrieben wird.

**19.** Verfolgungssystem nach Anspruch 18, wobei der einzige Orientierungsparameter ($\alpha$) ein Drehwinkel um eine vertikale Achse (y) des Kopfhörers (450) ist.

**20.** Verfolgungssystem nach einem der Ansprüche 1 bis 19, wobei das Übertragungsgerät (410) eine LED enthält.

**21.** Verfolgungssystem nach einem der Ansprüche 1 bis 19, wobei das Übertragungsgerät (410) ein Halbleiterlesegerät enthält.

**22.** Übertragungssystem nach einem der Ansprüche 1 bis 21, angepasst zum Bestimmen wenigstens von Orientierung oder Position einer Mehrzahl von Kopfhörern (450), an deren jedem ein Übertragungsgerät (410) angebracht ist, wobei die von jedem der Übertragungsgeräte (410) ausgesendeten Erkennungssignale unterschieden werden, indem sie verschiedene Modulationsfrequenzen haben.

**23.** Fahrzeugunterhaltungs- und Informationssystem umfassend:

einen Kopfhörer (450) zur Tonwiedergabe von Audiodaten, und
ein Verfolgungssystem nach einem der Ansprüche 1 bis 22 zum Bestimmen wenigstens einer Orientierung oder Position des Kopfhörers (450).

**24.** Fahrzeugunterhaltungs- und Informationssystem nach Anspruch 23, wobei das Erkennungsgerät (420) am Fahrzeughimmel, in der Mitte der beiden Vordersitze montiert ist.

**25.** Verfahren zum Bestimmen wenigstens einer Orientierung oder Position eines Kopfhörers (450) zur Surround-Tonwiedergabe von Audiodaten, wobei das Verfahren die Schritte umfasst:

Übertragen wenigstens eines Erkennungssignals von einem Übertragungsgerät (410), wobei das Erkennungssignal eine modulierte elektromagnetische Welle mit einer wohldefinierten Phase ist,

Empfangen des wenigstens einen von dem Übertragungsgerät (410) übertragenen Erkennungssignals an einem Erkennungsgerät (420), das wenigstens einen PMD-Sensor (420a, 420b, 420c) enthält, wobei entweder das Übertragungsgerät (410) oder das Erkennungsgerät (420) an dem Kopfhörer (450) fixiert ist und das jeweilige andere von dem Übertragungsgerät (410) und dem Erkennungsgerät (420) sich an einer festen Position befindet,

Erkennen wenigstens eines Abstandes (X13, X23, X33; $I_{AD}$, $I_{BD}$), $I_{CD}$) zwischen dem PMD-Sensor (420a, 420b, 420c) und dem Übertragungsgerät (410); und

Bestimmen wenigstens eines Orientierungs- oder Positionsparameters des Kopfhörers (450) basierend auf dem Abstand zwischen dem wenigstens einen PMD-Sensor (420a, 420b, 420c) und dem Übertragungsgerät (410).

26. Verfahren nach Anspruch 25, wobei das wenigstens eine Erkennungssignal ein Infrarotsignal ist.

27. Verfahren nach Anspruch 25 oder 26, wobei das wenigstens eine Erkennungssignal mit einer Modulationsfrequenz im Bereich von 10 MHz bis 200 MHz moduliert ist.

28. Verfahren nach Anspruch 27, wobei die Modulationsfrequenz ungefähr 20 MHz ist.

29. Verfahren nach einem der Ansprüche 25 bis 28, wobei der Erkennungsschritt den Abstand (X13, X23, X33; $I_{AD}$, $I_{BD}$, $I_{CD}$) durch Korrelieren einer modulierten Erkennungsspannung ($U_m(t)$), die in dem wenigstens einen PMD-Sensor (420a, 420b, 420c) angelegt wird, mit dem empfangenen Erkennungssignal ($I_{hv}(t)$) erkennt, und wobei die modulierte Erkennungsspannung ($U_m(t)$) mit der Modulation des von dem Übertragungsgerät (410) übertragenen Erkennungssignals synchronisiert ist.

30. Verfahren nach einem der Ansprüche 25 bis 29, weiterhin umfassend die Schritte:

Erzeugen eines Modulationssignals, und

synchrones Weiterleiten des Modulationssignals an das Übertragungsgerät (410) zum Erzeugen der modulierten elektromagnetischen Welle und an den wenigstens einen PMD-Sensor (420a, 420b, 420c) zum Erzeugen einer modulierten Erkennungsspannung ($U_m(t)$).

31. Verfahren nach Anspruch 30, wobei das Modulationssignal an das Übertragungsgerät (410) über eine Schnur weitergeleitet wird.

32. Verfahren nach Anspruch 30, wobei der Kopfhörer ein schnurloser Kopfhörer (450) ist, und das Modulationssignal an das an dem Köpfhörer (450) fixierte Übertragungsgerät (410) weitergeleitet wird, indem es dem radiofrequenten oder infraroten Träger, der die Audiodaten an den Kopfhörer (450) überträgt, hinzugefügt wird.

33. Verfahren nach einem der Ansprüche 25 bis 32, wobei der Erkennungsschritt Abstände zwischen dem Übertragungsgerät und einer Mehrzahl PMD-Sensoren (420a, 420b, 420c), die sich an unterschiedlichen Positionen (R1, R2, R3; D) befinden, erkennt.

34. Verfahren nach einem der Ansprüche 25 bis 33, wobei das Übertragungsgerät (410) eine Mehrzahl von Signalübertragern (410a, 410b, 410c) umfasst, die an unterschiedlichen Positionen (T1, T2, T3; A, B, C) angebracht sind.

35. Verfahren nach Anspruch 34, wobei
in dem Übertragungsschritt die Signalübertrager (410a, 410b, 410c) ein Erkennungssignal in aufeinander folgenden Zeiträumen übertragen, und
der Erkennungsschritt Abstände (X13, X23, X33; $I_{AD}$, $I_{BD}$, $I_{CD}$) zwischen jedem der Signalübertrager (410a, 410b, 410c) und dem wenigstens einem PMD-Sensor (420a, 420b, 420c) zeitlich aufeinander folgend erkennt.

36. Verfahren nach einem der Ansprüche 25 bis 35, wobei der Erkennungsschritt wenigstens einen Orientierungsparameter ($\alpha$) und wenigstens einen Positionsparameter (x; y; z) des Kopfhörers (450) bestimmt.

37. Verfahren nach Anspruch 36, wobei der Erkennungsschritt Abstände zwischen dem Übertragungsgerät (410) und drei PMD-Sensoren (420a, 420b, 420c), die eine vorbestimmte Dreiecksandordnung (R1 R2R3) bilden, bestimmt.

38. Verfahren nach Anspruch 36 oder 37, wobei das Übertragungsgerät (410) zwei Signalübertrager (410a 410b) enthält, die an unterschiedlichen Positionen (T1, T2; A, B) angebracht sind.

**39.** Verfahren nach Anspruch 36 oder 37, wobei das Übertragungsgerät (410) drei Signalübertrager (410a, 410b, 410c) enthält, die eine vorbestimmte Dreiecksanordnung (T1T2T3; ABC) bilden.

**40.** Verfahren nach Anspruch 39, wobei das Übertragungsgerät (410) mehr als drei Signalübertrager enthält.

**41.** Verfahren nach einem der Ansprüche 25 bis 40, welches Orientierung und Position des Kopfhörers (450) vollständig bestimmt.

**42.** Verfahren nach einem der Ansprüche 25 bis 32, wobei der Erkennungsschritt einen einzigen Abstand (X13, X23, X33; I$_{AD}$, I$_{BD}$, I$_{CD}$) erkennt, und der Bestimmungsschritt einen einzigen Orientierungsparameter ($\alpha$) bestimmt, unter der Annahme, dass der Kopfhörer (450) nur einen einzigen Bewegungsfreiheitsgrad hat, der durch den einzigen Orientierungsparameter ($\alpha$) beschrieben wird.

**43.** Verfahren nach Anspruch 42, wobei der einzige Orientierungsparameter ($\alpha$) ein Drehwinkel um eine vertikale Achse (y) des Kopfhörers (450) ist.

**44.** Verfahren nach einem der Ansprüche 25 bis 43, wobei das Übertragungsgerät (410) eine LED enthält.

**45.** Verfahren nach einem der Ansprüche 25 bis 43, wobei das Übertragungsgerät (410) ein Halbleiterlesegerät enthält.

**46.** Verfahren nach einem der Ansprüche 25 bis 45, welches wenigstens Orientierung oder Position einer Mehrzahl von Kopfhörern (450), an deren jedem ein Übertragungsgerät (410) angebracht ist, bestimmt, wobei
in dem Übertragungsschritt jedes der Übertragungsgeräte (410) Erkennungssignale überträgt, die **dadurch** unterschieden werden, dass sie verschiedene Modulationsfrequenzen haben.

**Revendications**

**1.** Système de poursuite pour déterminer au moins une orientation ou une position d'écouteurs (450) pour une reproduction en ambiophonie ou son surround de données audio, le système de poursuite comprenant :

- un dispositif émetteur (410) pour émettre au moins un signal de détection ;
- un dispositif de détection (420), un dispositif parmi le dispositif émetteur (410) et le dispositif de détection (420) étant fixé sur lesdits écouteurs (450), et l'autre dispositif parmi ledit dispositif émetteur (410) et ledit dispositif de détection (420) étant situé à une position fixée ; et
- une unité de traitement (430) pour déterminer au moins un paramètre d'orientation ou de position desdits écouteurs (450) ;
- **caractérisé en ce que** :
- ledit signal de détection est une onde électromagnétique modulée ayant une mise en phase bien définie ;
- ledit dispositif de détection (420) comprend au moins un capteur PMD (420a, 420b, 420c) pour recevoir l'au moins un signal de détection émis par ledit dispositif émetteur (410) et pour détecter au moins une distance (X13, X23, X33 ; I$_{AD}$, I$_{BD}$, I$_{CD}$) entre ledit capteur PMD (420a, 420b, 420c) et ledit dispositif émetteur (410) ; et
- ladite unité de traitement détermine ledit au moins un paramètre d'orientation ou de position en fonction de ladite distance entre ledit au moins un capteur PMD (420a, 420b, 420c) et ledit dispositif émetteur (410).

**2.** Système de poursuite selon la revendication 1, dans lequel ledit au moins un signal de détection est un signal infrarouge.

**3.** Système de poursuite selon la revendication 1 ou 2, dans lequel ledit au moins un signal de détection est modulé à une fréquence de modulation comprise dans la gamme allant de 10 MHz à 200 MHz.

**4.** Système de poursuite selon la revendication 3, dans lequel ladite fréquence de modulation est approximativement de 20 MHz.

**5.** Système de poursuite selon l'une quelconque des revendications 1 à 4, dans lequel ledit dispositif de détection (420) détecte ladite distance (X13, X23, X33 ; I$_{AD}$, I$_{BD}$, I$_{CD}$) en effectuant une corrélation entre une tension de

détection modulée ($U_m(t)$), appliquée audit au moins un capteur PMD (420a, 420b, 420c), et le signal de détection reçu ($I_{hv}(t)$) et dans lequel ladite tension de détection modulée ($U_m(t)$) est synchronisée avec la modulation du signal de détection émis depuis le dispositif émetteur (410).

6. Système de poursuite selon l'une quelconque des revendications 1 à 5, comprenant en outre un générateur de signal (460) pour générer un signal de modulation, ledit signal de modulation étant transmis de manière synchrone audit dispositif émetteur (410) pour générer ladite onde électromagnétique modulée et audit au moins un capteur PMD (420a, 420b, 420c) pour générer une tension de détection modulée ($U_m(t)$).

7. Système de poursuite selon la revendication 6, dans lequel ledit signal de modulation est transmis audit dispositif émetteur (410) via un cordon.

8. Système de poursuite selon la revendication 6, dans lequel lesdits écouteurs sont des écouteurs sans cordon (450), et ledit signal de modulation est transmis audit dispositif émetteur (410) fixé sur lesdits écouteurs (450) en étant ajouté à la porteuse radiofréquence ou infrarouge transmettant les données audio aux écouteurs (450).

9. Système de poursuite selon l'une quelconque des revendications 1 à 8, dans lequel ledit dispositif de détection (420) comprend une pluralité de capteurs PMD (420a, 420b, 420c) disposés à différentes positions (R1, R2, R3 ; D).

10. Système de poursuite selon l'une quelconque des revendications 1 à 9, dans lequel ledit dispositif émetteur (410) comprend une pluralité d'émetteurs de signaux (410a, 410b, 410c) fixés à différentes positions (T1, T2, T3 ; A, B, C).

11. Système de poursuite selon la revendication 10, dans lequel lesdits émetteurs de signaux (410a, 410b, 410c) émettent un signal de détection à des périodes de temps successives afin de détecter les distances (X13, X23, X33 ; $I_{AD}$, $I_{BD}$, $I_{CD}$) entre chacun desdits émetteurs de signaux (410a, 410b, 410c) et ledit au moins un capteur PMD (420a, 420b, 420c) successivement dans le temps.

12. Système de poursuite selon l'une quelconque des revendications 1 à 11, dans lequel ladite unité de traitement (430) est adaptée à déterminer au moins un paramètre d'orientation ($\alpha$) et au moins un paramètre de position (x ; y ; z) desdits écouteurs (450).

13. Système de poursuite selon la revendication 12, dans lequel ledit dispositif de détection (420) comprend trois capteurs PMD (420a, 420b, 420c) formant un agencement triangulaire prédéterminé (R1 R2 R3).

14. Système de poursuite selon la revendication 12 ou 13, dans lequel ledit dispositif émetteur (410) comprend deux émetteurs de signaux (410a, 410b) fixés à différentes positions (T1, T2 ; A, B).

15. Système de poursuite selon la revendication 12 ou 13, dans lequel ledit dispositif émetteur (410) comprend trois émetteurs de signaux (410a, 410b, 410c) formant un agencement triangulaire prédéterminé (T1 T2 T3 ; A B C).

16. Système de poursuite selon la revendication 15, dans lequel ledit dispositif émetteur (410) comprend plus de trois émetteurs de signaux.

17. Système de poursuite selon l'une quelconque des revendications 1 à 16, étant adapté à déterminer complètement l'orientation et la position desdits écouteurs (450).

18. Système de poursuite selon l'une quelconque des revendications 1 à 8, dans lequel ladite unité de traitement est adaptée à déterminer un unique paramètre d'orientation ($\alpha$), en fonction de la détection d'une unique distance (X13, X23, X33 ; $I_{AD}$, $I_{BD}$, $I_{CD}$) par ledit dispositif de détection (420), en supposant que ledit objet mobile (300) ait un seul degré de liberté de mouvement décrit par ledit unique paramètre d'orientation ($\alpha$).

19. Système de poursuite selon la revendication 18, dans lequel ledit unique paramètre d'orientation ($\alpha$) est un angle de rotation autour d'un axe vertical (y) desdits écouteurs (450).

20. Système de poursuite selon l'une quelconque des revendications 1 à 19, dans lequel ledit dispositif émetteur (410) comprend une diode électroluminescente ou LED.

21. Système de poursuite selon l'une quelconque des revendications 1 à 19, dans lequel ledit dispositif émetteur (410) comprend un dispositif laser à semiconducteur.

22. Système de poursuite selon l'une quelconque des revendications 1 à 21, étant adapté à déterminer au moins l'orientation ou la position d'une pluralité d'écouteurs (450) ayant chacun un dispositif émetteur (410) qui leur est fixé, dans lequel les signaux de détection émis par chacun desdits dispositifs émetteurs (410) sont distingués par le fait qu'ils aient des fréquences de modulation différentes.

23. Système de divertissement et d'information pour véhicule, comprenant :

   - des écouteurs (450) pour une reproduction sonore de données audio ; et
   - un système de poursuite selon l'une quelconque des revendications 1 à 22 pour déterminer au moins une orientation ou une position desdits écouteurs (450).

24. Système de divertissement et d'information pour véhicule selon la revendication 23, dans lequel ledit dispositif de détection (420) est monté au plafond du véhicule, au milieu des deux sièges avant.

25. Procédé pour déterminer au moins une orientation ou une position d'écouteurs (450) pour une reproduction en son surround de données audio, le procédé comprenant les étapes consistant à :

   - émettre au moins un signal de détection depuis un dispositif émetteur (410), ledit signal de détection étant une onde électromagnétique modulée ayant une mise en phase bien définie ;
   - recevoir l'au moins un signal de détection, émis par ledit dispositif émetteur (410), au niveau d'un dispositif de détection (420) comprenant au moins un capteur PMD (420a, 420b, 420c), dans lequel un dispositif parmi le dispositif émetteur (410) et le dispositif de détection (420) est fixé sur lesdits écouteurs (450), et l'autre dispositif parmi ledit dispositif émetteur (410) et ledit dispositif de détection (420) étant situé à une position fixée ;
   - détecter au moins une distance (X13, X23, X33 ; $I_{AD}$, $I_{BD}$, $I_{CD}$) entre ledit capteur PMD (420a, 420b, 420c) et ledit dispositif émetteur (410) ; et
   - déterminer au moins un paramètre d'orientation ou de position desdits écouteurs (450) en fonction de ladite distance entre ledit au moins un capteur PMD (420a, 420b, 420c) et ledit dispositif émetteur (410).

26. Procédé selon la revendication 25, pour lequel ledit au moins un signal de détection est un signal infrarouge.

27. Procédé selon la revendication 25 ou 26, pour lequel ledit au moins un signal de détection est modulé à une fréquence de modulation comprise dans la gamme allant de 10 MHz à 200 MHz.

28. Procédé selon la revendication 27, pour lequel ladite fréquence de modulation est approximativement de 20 MHz.

29. Procédé selon l'une quelconque des revendications 25 à 28, pour lequel ladite étape de détection détecte ladite distance (X13, X23, X33 ; $I_{AD}$, $I_{BD}$, $I_{CD}$) en effectuant une corrélation entre une tension de détection modulée ($U_m$(t)), appliquée audit au moins un capteur PMD (420a, 420b, 420c), et le signal de détection reçu ($I_{hv}$(t)) et pour lequel ladite tension de détection modulée ($U_m$(t)) est synchronisée avec la modulation du signal de détection émit depuis le dispositif émetteur (410).

30. Procédé selon l'une quelconque des revendications 25 à 29, comprenant en outre les étapes consistant à :

   - générer un signal de modulation ; et
   - transmettre de manière synchrone ledit signal de modulation audit dispositif émetteur (410) pour générer ladite onde électromagnétique modulée et audit au moins un capteur PMD (420a, 420b, 420c) pour générer une tension de détection modulée ($U_m$(t)).

31. Procédé selon la revendication 30, pour lequel ledit signal de modulation est transmis audit dispositif émetteur (410) via un cordon.

32. Procédé selon la revendication 30, pour lequel lesdits écouteurs sont des écouteurs sans cordon (450), et ledit signal de modulation est transmis audit dispositif émetteur (410) fixé sur lesdits écouteurs (450) en étant ajouté à la porteuse radiofréquence ou infrarouge transmettant les données audio aux écouteurs (450).

33. Procédé selon l'une quelconque des revendications 25 à 32, pour lequel ladite étape détecte les distances entre ledit dispositif émetteur et une pluralité de capteurs PMD (420a, 420b, 420c) disposés à différentes positions (R1, R2, R3 ; D).

34. Procédé selon l'une quelconque des revendications 25 à 33, pour lequel ledit dispositif émetteur (410) comprend une pluralité d'émetteurs de signaux (410a, 410b, 410c) fixés à différentes positions (T1, T2, T3 ; A, B, C).

35. Procédé selon la revendication 34, pour lequel :

- à ladite étape d'émission lesdits émetteurs de signaux (410a, 410b, 410c) émettent un signal de détection à des périodes de temps successives ; et
- ladite étape de détection détecte les distances (X 13, X23, X33 ; $I_{AD}$, $I_{BD}$, $I_{CD}$) entre chacun desdits émetteurs de signaux (410a, 410b, 410c) et ledit au moins un capteur PMD (420a, 420b, 420c) successivement dans le temps.

36. Procédé selon l'une quelconque des revendications 25 à 35, pour lequel ladite étape de détermination détermine au moins un paramètre d'orientation ($\alpha$) et au moins un paramètre de position (x ; y ; z) desdits écouteurs (450).

37. Procédé selon la revendication 36, pour lequel ladite étape de détection détecte les distances entre ledit dispositif émetteur (410) et trois capteurs PMD (420a, 420b, 420c) formant un agencement triangulaire prédéterminé (R1 R2 R3).

38. Procédé selon la revendication 36 ou 37, pour lequel ledit dispositif émetteur (410) comprend deux émetteurs de signaux (410a, 410b) fixés à différentes positions (T1, T2 ; A, B).

39. Procédé selon la revendication 36 ou 37, pour lequel ledit dispositif émetteur (410) comprend trois émetteurs de signaux (410a, 410b, 410c) formant un agencement triangulaire prédéterminé (T1 T2 T3 ; A B C).

40. Procédé selon la revendication 39, pour lequel ledit dispositif émetteur (410) comprend plus de trois émetteurs de signaux.

41. Procédé selon l'une quelconque des revendications 25 à 40, déterminant complètement l'orientation et la position desdits écouteurs (450).

42. Procédé selon l'une quelconque des revendications 25 à 32, pour lequel ladite étape de détection détecte une seule distance (X13, X23, X33 ; $I_{AD}$, $I_{BD}$, $I_{CD}$), et ladite étape de détermination détermine un unique paramètre d'orientation ($\alpha$), en supposant que lesdits écouteurs (450) aient un seul degré de liberté de mouvement décrit par ledit unique paramètre d'orientation ($\alpha$).

43. Procédé selon la revendication 42, pour lequel ledit unique paramètre d'orientation ($\alpha$) est un angle de rotation autour d'un axe vertical (y) desdits écouteurs (450).

44. Procédé selon l'une quelconque des revendications 25 à 43, pour lequel ledit dispositif émetteur (410) comprend une LED.

45. Procédé selon l'une quelconque des revendications 25 à 43, pour lequel ledit dispositif émetteur (410) comprend un dispositif laser à semiconducteur.

46. Procédé selon l'une quelconque des revendications 25 à 45, déterminant au moins l'orientation ou la position d'une pluralité d'écouteurs (450) ayant chacun un dispositif émetteur (410) qui leur est fixé, pour lequel

- à ladite étape d'émission chacun desdits dispositifs émetteurs (410) émet des signaux de détection qui sont distingués par le fait qu'ils aient des fréquences de modulation différentes.

FIG. 1

FIG. 2A

FIG. 2B

FIG. 2C

FIG. 2D

FIG. 2E

FIG. 3

FIG. 4A

FIG. 4B

FIG. 5

FIG. 6

FIG. 7

**EP 2 107 390 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20040051926 A1
- US 5495534 A
- US 20040156512 A1